# EUROPÄISCHE PATENTSCHRIFT

(11) **EP 0 943 786 B1**
(45) Veröffentlichungstag und Bekanntmachung des Hinweises auf die Patenterteilung: **14.12.2005**
(21) Anmeldenummer: 99103229.3
(22) Anmeldetag: 19.02.1999
(51) Int. Cl.: F01N 3/08, F01N 9/00, F02D 41/02

(54) **Verfahren zur Steuerung der Abgasnachbehandlung eines DI-Otto- und Magermotors**
Method to control the exhaust gas treating of a direct injection Otto engine and of a lean-burn engine
Procédé de commande d'un dispositif de traitement des gaz d'échappement pour un moteur Otto à injection directe et pour un moteur à combustion de mélange faible

(30) Priorität: 14.03.1998 DE 19811257
(43) Veröffentlichungstag der Anmeldung: 22.09.1999
(60) Teilanmeldung: 04002578.5
(73) Patentinhaber: Volkswagen Aktiengesellschaft, 38436 Wolfsburg (DE)
(72) Erfinder: Standt, Ulrich-Dieter, Dr., 38527 Meine (DE)
(74) Vertreter: Meyer, Enno

(56) Entgegenhaltungen:
- EP-A- 0 580 389
- EP-A- 0 860 594
- EP-A- 0 867 604
- US-A- 5 473 890

## Beschreibung

Die Erfindung betrifft die Steuerung der Abgasnachbehandlung eines DI-Ottomotors, Dieselmotors oder Mager-Ottomotors, insbesondere die Bestimmung des Beladungszustandes eines NOx-Speichers eines NOx-Speicherkatalysators, so daß zu dem Zeitpunkt in den regenerierenden Fett-Betrieb umgeschaltet werden kann, wenn der NOx-Speicher gefüllt ist.

Die Entstickung von Mager-Ottomotoren, Dieselmotoren oder DI-Ottomotoren erfordert eine besondere Abgasnachbehandlungstechnik, weil einerseits Dieselmotoren, die bisher ohne Entstickungseinrichtungen auf den Markt gebracht wurden, nicht mehr zukünftige Abgasnormen erfüllen und z. B. in den USA bereits einen besonderen, erhöhten NOx-Emissionsgrenzwert haben, und andererseits Mager-Ottomotoren und DI-Ottomotoren, die mit konventionellen 3-Wege-Katalysatoren ausgestattet sind, zwar über eine HC- und CO-Nachbehandlung verfügen, aber nicht über eine Entstickung, da der 3-Wege-Katalysator bei λ-Werten oberhalb eines λ-Wertes von ca. 1,05 keine nennenswerte NOx-Reduktion bewirken kann.

Eine derzeit realisierte Abgasnachbehandlung ist der von Mazda vertriebene 3-Wege-Katalysator mit zusätzlicher Entstickungskomponente für mageres Abgas (SAE 950746). Dieser ist als ein Pt/lr/Rh-Katalysator mit ZMS5-Zeolith eines SiO₂₋Al₂O₃-Verhältnisses von 30 realisiert. Ein derartiger Katalysator sollte ohne besondere Anforderungen an die Motorsteuerung eine kontinuierliche Entstickung gewährleisten. Der Hersteller gibt die NOx-Konversion im mageren Abgas nach Alterung (800 bis 1000 °C) mit über 60 % an. Nachmessungen haben allerdings ergeben, daß der Mazda-Katalysator jedoch bei einem Wert von λ = 1,5 eine nicht signifikante NOx-Konversion aufweist. Den angegebenen Konversionswert von über 60 % konnte der Katalysator nur bei einem λ-Wert von 1 erreichen. Daher ist ein derartiger Katalysator angesichts der zu erwartenden Grenzwerte der Abgasemission nur begrenzt tauglich.

Eine andere Art der Abgasnachbehandlung für DI-Otto- und Mager-Ottomotoren ist die Entstickung des Abgases mit NOx-Speicher-Katalysatoren. Dabei wird das motorisch emittierte NOx in den mageren Betriebsphasen des Motors im NOx-Speicherteil des Katalysators lediglich zwischengespeichert und bei stöchiometrischen oder fetten Phasen des Motorbetriebs katalytisch umgesetzt und reduziert. Der Vorteil dieser Art der Abgasnachbehandlung liegt darin, daß als NOx-reduzierende Komponenten nicht nur die emittierten Kohlenwasserstoffe, sondern auch das emittierte CO zur Verfügung stehen, welches bei λ ≤ 1 auch NOx umzusetzen vermag. Für Mager-Ottomotoren ist diese Art der Abgasnachbehandlung durch Toyota eingeführt worden. Die Wirkungsweise des Katalysators bedingt eine besondere Art der Motorsteuerung während Konstant-Betriebsphasen, in denen nur mager gefahren wird. Da durch den Mager-Betrieb der NOx-Speicher des Katalysators beladen wird, gibt es einen Zeitpunkt, zu dem der NOx-Speicher gefüllt und damit seine Fähigkeit des Speichern von NOx erschöpft ist. Daher muß der NOx-Speicher in regelmäßigen Abständen regeneriert werden. Um die Regeneration durchführen zu können, ist es hierzu erforderlich, die Beladung des NOx-Speichers zu erkennen. Dazu werden in der Patentliteratur, beispielsweise DE 195 06 980 und EP 580 389, zahlreiche Parameter vorgeschlagen, die im wesentlichen von Motorbetriebsparametem abgeleitet sind. Sehr oft wird als Kriterium die Sauerstoffkonzentration in Zusammenhang mit einer Verweildauer im Betrieb bei hoher Sauerstoffkonzentration (λ > 1) vorgeschlagen. Ferner wird in der DE 195 1 548 vorgeschlagen, den Gehalt des Abgases an Stickoxiden, HC bzw. CO als Maß für den Betriebszustand des Motors zu verwenden. Allerdings sind die genannten Parameter oft nur relativ aufwendig bestimmbar.

EP 0 860 594 A1 beschreibt ein Verfahren zur Bestimmung des Beladungsgrades eines NOx-Speicherkatalysators, wobei die Temperatur des Abgases gemessen wird, und die gemessene Temperatur ein Maß für den Beladungszustand des NOx-Speichers des Katalysators bildet.

Der Erfindung liegt daher die Aufgabe zugrunde, ein einfaches Verfahren zur Bestimmung des Beladungszustands des NOx-Speichers eines entsprechenden Katalysators zu schaffen.

Die Aufgabe wird durch die Merkmale der Ansprüche 1 und 3 gelöst. Bevorzugte Ausgestaltungen der Erfindung sind Gegenstand der abhängigen Ansprüche.

Bei einem DI-Ottomotor besteht die Möglichkeit, bei höheren Drehzahlen und Lasten noch weiter in den mageren Bereich hineinzufahren, ohne eine für die katalytische Aktivität kritische Abgastemperatur vor Katalysator von derzeit ca. 200 °C zu unterschreiten. Damit ergibt sich aus der Abgastemperatur bei entsprechender motorischer Einstellung für höhere Drehzahl/Lastkollektive und entsprechend höhere stündliche NOx-Emissionen ein weiterer auswertbarer Parameter, der für die Beladung des NOx-Speichers herangezogen werden kann: nämlich die Differenz zwischen der Temperatur bei kleinem λ und der Temperatur bei hohem λ.

Der Erfindung liegt die Erkenntnis zugrunde, daß unter gewissen Betriebsbedingungen eines Kraftfahrzeuges eine Regeneration des NOx-Speichers unter Umständen nicht rechtzeitig stattfindet. Im Normalfall liegen im dynamischen Betrieb eines Kraftfahrzeuges mit einem NOx-Speicherkatalysator, insbesondere beim Einsatz desselben in einem magerbetriebenen Otto-Motor, vorzugsweise Direkteinspritzer-Otto-Motor, genügend häufig Betriebsbedingungen vor, bei denen, insbesondere bedingt durch ein Beschleunigen des Fahrzeuges, ein stöchiometrisches oder fettes Gemisch dem Motor zur Verbrennung zugeführt wird. Durch diesen relativ häufig auftretenden Zustand λ ≤ 1 wird der Speicher regeneriert, so daß beispielsweise ein üblicher, genügend groß bemessener NOx-Speicher, beispielsweise im FTP, Federal Test Procedure (US 75-Test), nicht übersättigt wird, so daß eine aufwendige Speicherüberwachung hier nicht erforderlich ist.

Wird das Kraftfahrzeug jedoch über eine längere Zeit (ab ca. 1 Minute) konstant betrieben, beispielsweise mit 80 km/h, wie es außerorts durchaus öfter vorkommt, dann kann der Speicher seine Kapazitätsgrenze erreichen. Die Zeitspanne bis zur Sättigung des NOx-Speichers ist hierbei von den Betriebsbedingungen abhängig. Erfindungsgemäß wird die Sättigung bzw. der Beladungszustand des NOx-Speichers mit Hilfe der Abgastemperatur ermittelt, die bei einem Betrieb der Brennkraftmaschine mit λ ≤ 1 verhältnismäßig hoch ist und nach einem Umstellen des Motorbetriebs auf mager, insbesondere λ ≥ 1,3 und besonders vorteilhaft λ ≥ 1,6 über einen Zeitraum von ca. 1 Minute asymptotisch auf einen niedrigeren Wert absinkt. Entsprechend läßt sich aus der absoluten Temperatur, dem Gradienten der Temperatur bzw. weiteren temperaturabhängigen Parametern eine NOx-Ausstoßmenge im Rohabgas und somit auch ein Beladungszustand des Speichers ermitteln. Entsprechend wird die erfindungsgemäße Ermittlung der Speicherbeladung vorteilhaft bei im wesentlichen konstanten Betriebsbedingungen der Brennkraftmaschine vorgenommen. Insbesondere erfolgt außerdem ein Kennfeldabgleich zur Ermittlung exakter Rohemissionswerte.

Somit ergeben sich folgende Möglichkeiten zur Bestimmung der NOx-Speicherbeladung unter Verwendung der Abgastemperatur und daraus abgeleiteter Parameter und weiterer Meßgrößen:
- Abgastemperaturdifferenz ΔT_{Abg} zwischen kleinem und hohem λ-Wert und Sauerstoffgehalt im Abgas,
- ΔT_{Abg} und Drehmomentschwankung/Pme-Schwankung σ_{Pme}.

Außerdem ist es möglich, als weiteren, für die NOx-Entstehung mitverantwortlichen Betriebsparameter die Kraftstoff-Einspritzmenge bzw. Einspritzzeit tᵢ zu verwenden, die besonders beim DI-Ottomotor als zu der Last proportionales Signal herangezogen werden kann, so daß sich die folgenden Bestimmungsmöglichkeiten des Beladungszustandes des NOx-Speichers aus den Kombinationen der Parameter ergeben:
- tᵢ und ΔT_{Abg},
- tᵢ und ΔT_{Abg} und Sauerstoffgehalt im Abgas,
- tᵢ und σ_{Pme} und ΔT_{Abg}.

Ferner ermöglicht auch die Verwendung des Temperaturgradienten grad(T_{Abg}) in Kombination mit einem oder mehreren der anderen, oben aufgeführten Parameter die Bestimmung des Beladungszustandes des NOx-Speichers. Also beispielsweise
- grad(T_{Abg}) und verstrichene Zeit t_{BA} seit Beginn des Mager-Betriebs,
- grad(T_{Abg}) und Drehmomentschwankung/Pme-Schwankung (σ_{Pme}),
- grad(T_{Abg}) und Sauerstoffgehalt im Abgas,

Ferner läßt sich ebenfalls aus der obengenannten Einspritzzeit tᵢ und dem Gradienten der Abgastemperatur sowie der weiteren oben genannten Parameter der Beladungszustand des NOx-Speichers bestimmen.

Vorteilhaft für die Verwendung der aus der Abgastemperatur abgeleiteten Parametern ist es insbesondere, daß
- die Abgastemperatur schnell gemessen werden kann im Gegensatz beispielsweise zu den bekannten Prototypen von NOx-Sonden, welche nur ein ungefähres Signal mit relativ hoher T₉₀-Zeit (ca. 500 ms) liefern. Der Meßfehler der bekannten NOx-Sonden wird außerdem um so größer, je weiter der Motor in den mageren Bereich hineinfährt, d.h. ein derartiges Meßverfahren könnte überhaupt nur für eine Parametrisierung der NOx-Speicher-Katalysator-Regeneration beim Mager-Ottomotor verwendet werden,
- die Abgastemperatur als eines der Kriterien für eine On-Board-Diagnose herangezogen werden kann, um die Aktivität des Katalysators im laufenden Betrieb zu detektieren, so daß dieses Signal ohnehin vorhanden sein wird und nur zusätzlich ausgewertet werden muß
- die Abgastemperatur mit hinreichender Genauigkeit mit etablierter Meßtechnik gemessen werden kann.

Die Verwendung des Abgastemperaturgradienten bzw. der Abgastemperaturdifferenz in Verbindung mit weiteren Parametern wie Sauerstoffgehalt im Abgas, σ_{Pme} etc. ermöglicht bei Verwendung geeigneter Algorithmen (fuzzy logic) eine genauere Bestimmung des Beladungszustandes des NOx-Speichers und damit des Zeitpunktes zur Einleitung der Regeneration.

Die hier aufgeführten zusätzlichen Parameter sind zum großen Teil Meßgrößen, die aus dem Motorsteuergerät und der λ-Meßsonde ohnehin zugänglich sind und nicht extra detektiert werden müßten.

Ein weiterer Vorteil der Abgastemperaturmessung besteht darin, daß man mit ihrer Hilfe auch geeignete Algorithmen zur SOx-Regeneration des NOx-Speicher-Katalysators aufstellen kann.

Die Erfindung ist nachfolgend anhand einer einzigen Zeichnung näher erläutert.

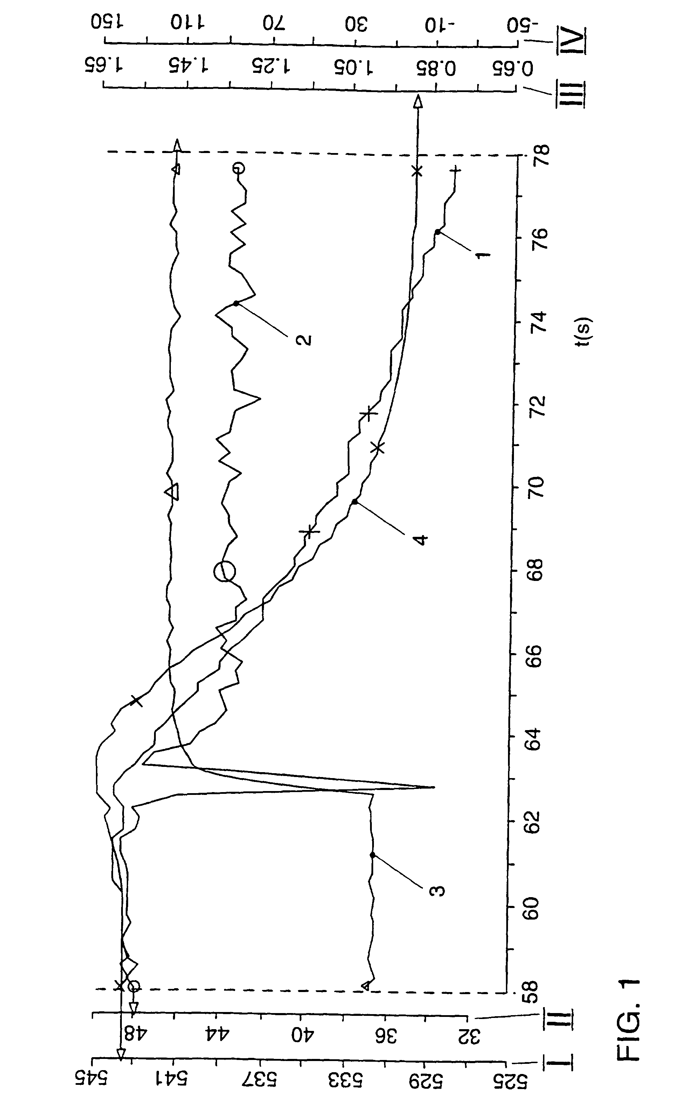

Fig. 1 zeigt eine Darstellung einer Messung der Abgastemperatur, der Motorleistung, des λ-Verlaufs und des NOx-Umsatzes als Funktion der Zeit.

Fig. 1 zeigt Meßkurven von vier Motor- bzw. Abgasparametern aufgetragen gegenüber der Zeit t in Sekunden. Dabei stellt die Meßkurve 1 (markiert mit "+"), der die Ordinate I zugehörig ist, die Abgastemperatur vor dem Katalysator in °C dar, die Meßkurve 2 (markiert mit "o"), zu der die Ordinate II gehört, das effektive Drehmoment in Nm des Motors dar, die Meßkurve 3 (markiert mit "Δ"), zu der die Ordinate III gehört, den eingestellten λ-Wert dar, und die Meßkurve 4 (markiert mit "X"), zu der die Ordinate IV gehört, die Masse des umgesetzten/gespeicherten Stickoxids NO in g/h dar. Aus den Verläufen der vier Meßkurven ergibt sich, daß der Motor zuerst fett mit einem λ-Wert von ca. 0,95 betrieben wird (Kurve 3). Zu einem vorbestimmten Zeitpunkt erfolgt die Umschaltung in den Mager-Betrieb, erkennbar durch den steilen Anstieg der Kurve 3. Zu diesem Zeitpunkt des Umschaltens erfolgt ein kurzer Leistungseinbruch des Motors, erkennbar an der Oszillation der Kurve 2, wobei sich das abgegebene Drehmoment kurz danach wieder auf einem etwas niedrigeren Niveau als während des Fett-Betriebs stabilisiert. Nach dem Umschalten in den Mager-Betrieb erfolgt ein kontinuierliches Absinken der Abgastemperatur (Kurve 1) als Funktion der Zeit t in exponentieller Form von dem hohen Abgastemperaturniveau während des Fett-Betriebs. Gleichzeitig erfolgt ein fast synchrones Abfallen der Kurve 4, die die Masse des umgesetzten/gespeicherten Stickoxids NO wiedergibt. Mit anderen Worten, die Masse des gespeicherten bzw. umgesetzten NOx sinkt kontinuierlich mit der Abgastemperatur im Mager-Betrieb.

Aufgrund der Korrelation der Abgastemperatur und der Stickoxidkurve 4 ist es möglich den Beladungszustand des NOx-Speichers aus der Abgastemperatur und weiteren Betriebsparametern abzuleiten. Zur Messung der gezeigten Kurven wurde ein 16-Ventiler VW-Mager-Otto-Motor (Prototyp) mit 1600 cm³ verwendet.

### BEZUGSZEICHENLISTE

- 1: Meßkurve Abgastemperatur
- 2: Meßkurve effektives Drehmoment
- 3: Meßkurve λ
- 4: Meßkurve Masse umgesetztes/gespeichertes Stickoxid
- I: Ordinate zu Kurve 1
- II: Ordinate zu Kurve 2
- III: Ordinate zu Kurve 3
- IV: Ordinate zu Kurve 4
- t: Zeit
- t_{BA}: Verstrichene Zeit seit der Abmagerung
- T_{Abg}: Abgastemperatur
- ΔT_{Abg}: Differenztemperatur
- grad(T_{Abg}): Temperaturgradient

## Patentansprüche

1. Verfahren zur Bestimmung des Beladungsgrades eines NOx-Speicherkatalysators,
wobei die Temperatur (T_{Abg}) des Abgases gemessen wird,
**dadurch gekennzeichnet, daß**
die Temperaturdifferenz (ΔT_{Abg}) zwischen der Abgastemperatur bei fettem Motorbetrieb und der Abgastemperatur bei magerem Motorbetrieb vor dem NOx-Speicherkatalysator ermittelt wird, und
die Temperaturdifferenz (ΔT_{Abg}) ein Maß für den Beladungszustand des NOx-Speichers des Katalysators bildet.

2. Verfahren nach Anspruch 1, **dadurch gekennzeichnet, daß** als mindestens ein weiterer Betriebsparameter zur Bildung des Maßes des Beladungszustandes des NOx-Speichers des Katalysators der Sauerstoffgehalt des Abgases, die seit dem Umschaltzeitpunkt von dem fetten in den mageren Betrieb verstrichene Zeit (t_{BA}), die Drehmomentschwankung/Pme-Schwankung oder die Einspritzzeit (tᵢ) herangezogen wird.

3. Verfahren zur Bestimmung des Beladungsgrades eines NOx-Speicherkatalysators,
wobei die Temperatur (T_{Abg}) des Abgases gemessen wird,
**dadurch gekennzeichnet, daß** nach Umstellen des Motorbetriebs von fetten auf mager der Temperaturgradient grad(T_{Abg}) der Abgastemperatur vor dem NOx-Speicherkatalysator ermittelt wird, und
der Temperaturgradient grad(T_{Abg}) ein Maß für den Beladungszustand des NOx-Speichers des Katalysators bildet.

4. Verfahren nach Anspruch 3, **dadurch gekennzeichnet, daß** als mindestens ein weiterer Betriebsparameter zur Bildung des Maßes des Beladungszustandes des NOx-Speichers des Katalysators der Sauerstoffgehalt des Abgases, die seit dem Umschaltzeitpunkt von dem fetten in den mageren Betrieb verstrichene Zeit (t_{BA}), die Drehmomentschwankung/Pme-Schwankung oder die Einspritzzeit (tᵢ) herangezogen wird

## Claims

1. Method for determining the degree of loading of an NOx storage catalytic converter, in which the temperature (T_{Abg}) of the exhaust gas is measured, **characterized in that** the temperature difference (ΔT_{Abg}) between the exhaust-gas temperature during rich-burn engine operation and the exhaust-gas temperature during lean-burn engine operation upstream of the NOx storage catalytic converter is determined, and the temperature difference (ΔT_{Abg}) forms a measure of the loading state of the NOx store of the catalytic converter.

2. Method according to Claim 1, **characterized in that** the oxygen content of the exhaust gas, the time (t_{BA}) which has elapsed since the engine was last switched from the rich-burn mode to the lean-burn mode, the torque fluctuation/Pme fluctuation or the injection time (tᵢ) is used as at least one further operating parameter for forming the measure of the loading state of the NOx store of the catalytic converter.

3. Method for determining the degree of loading of an NOx storage catalytic converter, in which the temperature (T_{Abg}) of the exhaust gas is measured, **characterized in that** after engine operation has been switched from rich-burn mode to lean-burn mode, the temperature gradient grad(T_{Abg}) of the exhaust-gas temperature upstream of the NOx storage catalytic converter is determined, and the temperature grad(T_{Abg}) forms a measure of the loading state of the NOx store of the catalytic converter.

4. Method according to Claim 3, **characterized in that** the oxygen content of the exhaust gas, the time (t_{BA}) which has elapsed since the engine was last switched from the rich-burn mode to the lean-burn mode, the torque fluctuation/Pme fluctuation or the injection time (tᵢ) is used as at least one further operating parameter for forming the measure of the loading state of the NOx store of the catalytic converter.

## Revendications

1. Procédé en vue de la détermination du degré de chargement d'un catalyseur à réservoir de NOx, la température TAbg du gaz d'échappement étant mesurée, **caractérisé en ce que** la différence de température (ΔTAbg) entre la température du gaz d'échappement en cas de fonctionnement du moteur en régime riche et la température du gaz d'échappement en cas de fonctionnement du moteur en régime maigre est déterminée avant le catalyseur à réservoir de NOx, et **en ce que** la différence de température (ΔTAbg) est une mesure de l'état de chargement du réservoir de NOx du catalyseur.

2. Procédé selon la revendication 1, **caractérisé en ce que** comme au moins un paramètre de fonctionnement supplémentaire en vue de la formation de la mesure de l'état de chargement du réservoir de NOx du catalyseur, on fait appel à la teneur en oxygène du gaz d'échappement, la période de temps (tBA) qui s'est écoulée depuis le point de commutation du fonctionnement en régime riche au fonctionnement en régime maigre, l'oscillation du couple/l'oscillation Pme ou la durée d'injection (ti).

3. Procédé en vue de la détermination du degré de chargement d'un catalyseur à réservoir de NOx, la température TAbg du gaz d'échappement étant mesurée, **caractérisé en ce que**, après le changement du fonctionnement du moteur du régime riche en régime maigre, le gradient de température grad (tAbg) de la température du gaz d'échappement est déterminée avant la catalyseur à réservoir de NOx, et **en ce que** le gradient de température grad (TAbg) est une mesure de l'état de chargement du réservoir de NOx du catalyseur.

4. Procédé selon la revendication 3, **caractérisé en ce que** comme au moins un paramètre de fonctionnement supplémentaire en vue de la formation de la mesure de l'état de chargement du réservoir de NOx du catalyseur, on fait appel à la teneur en oxygène du gaz d'échappement, la période de temps (tBA) qui s'est écoulée depuis le point de commutation du fonctionnement en régime riche au fonctionnement en régime maigre, l'oscillation du couple de rotation/l'oscillation Pme ou la durée d'injection (ti).
